# EUROPEAN PATENT APPLICATION

(11) **EP 1 959 687 A2**
(43) Date of publication of application: **20.08.2008**
(21) Application number: 07023785.4
(22) Date of filing: 07.12.2007
(51) Int. Cl.: H04N 7/24

(54) **Method and system for providing simultaneous transcoding of multi-media data**

(30) Priority: 21.12.2006 US 614330
(71) Applicant: GENERAL INSTRUMENT CORPORATION, Horsham, Pennsylvania 19044 (US)
(72) Inventor: Robbins, Clyde N., Maple Glen, Pennsylvania 19002 (US); Du Breuil, Thomas L., Ivyland, Pennsylvania 18974 (US)
(74) Representative: Openshaw, Paul Malcolm

(57) **Abstract**

A method and system for providing simultaneous transcoding of multi-media data are disclosed. For example, the method receives multi-media data in a first format. In turn, the method transmits the multimedia data to an output device, while simultaneously transcoding the multi-media data into at least one alternate format.

## Description

### FIELD OF THE INVENTION

The present invention relates generally to multi-media transmission and, in particular, providing simultaneously transcoding in conjunction with transferring and/or recording of multi-media data.

### BACKGROUND OF THE INVENTION

With the advent of portable video and audio consumer electronic devices, playing various types of multi-media data on these portable video and audio consumer electronic devices has become more popular. Consequently, the demand for multi-media data has significantly increased.

Currently, for users to obtain multi-media data for their portable video and audio consumer electronic devices, the multi-media data must be in a compatible format for use in their portable video and audio consumer electronic device. If the multi-media data is not in the proper format, then the multi-media data must be transcoded into a format compatible with the users' portable video and audio consumer electronic device. Generally, transcoding multi-media data can be a complicated and time consuming process.

For example, if a user obtains and saves multi-media data in one format for a particular device, then wishes to transfer the multi-media data to another device, the multi-media data must first be transcoded. For example, if the multi-media data takes two hours to obtain and two hours to transcode the multi-media data into another format, a user has spent four hours obtaining and formatting multi-media data. Therefore, a need exists for a method and system that provides a simultaneous transcode capability in conjunction with transfer and/or record capability.

### BRIEF DESCRIPTION OF THE DRAWINGS

The teaching of the present invention can be readily understood by considering the following detailed description in conjunction with the accompanying drawings, in which:

FIG. 1 illustrates an exemplary architectural overview of the present invention;

FIG. 2 illustrates a detailed block diagram of an exemplary endpoint device;

FIG. 3 illustrates an exemplary flow chart of a method for providing simultaneous transcoding of multi-media data;

FIG. 4 illustrates an exemplary flow chart of a non-storage embodiment of the present invention;

FIG. 5 illustrates an exemplary flow chart for a storage embodiment of the present invention;

FIG. 6 illustrates an exemplary flow chart further detailing the simultaneous transcoding of multi-media data; and

FIG. 7 illustrates a high level block diagram of an exemplary general purpose computer suitable for use in performing the functions described herein.

To facilitate understanding, identical reference numerals have been used, where possible, to designate identical elements that are common to the figures.

### DETAILED DESCRIPTION

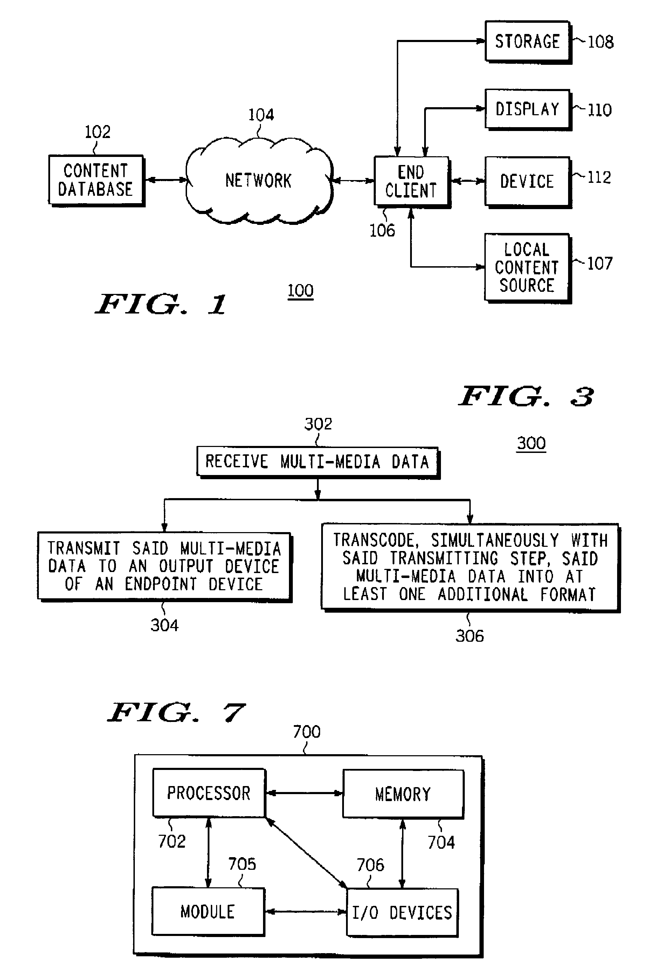

An exemplary architectural overview of a network 100 is illustrated in FIG. 1. In an exemplary embodiment, network 100 includes a content database 102 and an endpoint device 106. Although, only a single content database 102 and endpoint device 106 are shown, one skilled in the art will recognize that any number of content databases and endpoint devices may be used. Content database 102 may be, for example, a remote content server or a cable head- end, or a network broadcasting content continuously. As such, in this illustrative embodiment, the content is broadly defined as being provided by a service provider. Content database 102 contains multi-media data that may be transmitted to endpoint device 106 upon request by an end user. Multi-media data may be any type of video, audio, images or combination thereof in any format such as, for example, NTSC or PAL video, MPEG-2 video, H.264 video, MP3 audio, Dolby digital audio, JPEG, GIF and the like.

Endpoint device 106 may be any consumer electronic device that has storage and/or display capabilities, for example, a set top box with digital video recording (DVR) capabilities, a television with storage capabilities, or a personal computer. In an exemplary embodiment, endpoint device 106 also comprises storage medium 108, a display 110 and a connection to an external device 112. Storage medium 108 may be any type of memory such as, for example, an internal hard drive, external hard drive, read access memory (RAM), read only memory (ROM), and flash memory in any format such as secure digital, compact flash or memory stick.

External device 112 may be any portable media player and is intended to encompass broadly a portable video and audio consumer electronic device, a media-capable cell phone, a portable media capable communicating device (.e.g., a personal digital assistant (PDA) with communication capability or a portable messaging device), a laptop, a remote PC (e.g., via the Internet or via a local area network (LAN)), a portable entertainment system (e.g., located in an automobile), an external writable CD and/or DVD device, an external memory card, or an external storage device and the like. For example, external device 112 may be a Video iPod™ (of Apple Computer of Cupertino, CA), a video iPod™ (also of Apple Computer of Cupertino, CA), and other similar portable media players.

In one embodiment, content database 102 and endpoint device 106 communicate with each other via network 104. Network 104 may be any type of network capable of delivering multi-media data from content database 102 to endpoint device 106. For example, network 104 may be an internet protocol (IP) based network, such as the Internet typically used for IP TV, or a hybrid fiber coaxial (HFC) network typical used by cable service providers, and the like. It should be noted that the present invention is not limited by the type of network that is used to carry the multi-media data. Furthermore, the present invention is not limited as to the manner of the transmission of the multi-media data to the consumer, e.g., the multi-media data can be on-demand content or it can be broadcast content, e.g., via off-air, cable, satellite, fiber, DSL, or IP delivery.

Although FIG. 1 illustrates the content as being provided by a service provider in one embodiment, the present invention is not so limited. In an alternative embodiment, the content is provided locally by a local content source 107 without interaction with a service provider. For example, the content may be received from a DVD player or from any storage devices, e.g., from a computer that is in a home and is accessible via a local area network (LAN) within the home. As such, in one example, while the content is being received from a DVD player to be displayed on an output device, e.g., a display, the content can be simultaneously transcoded into an alternate format.

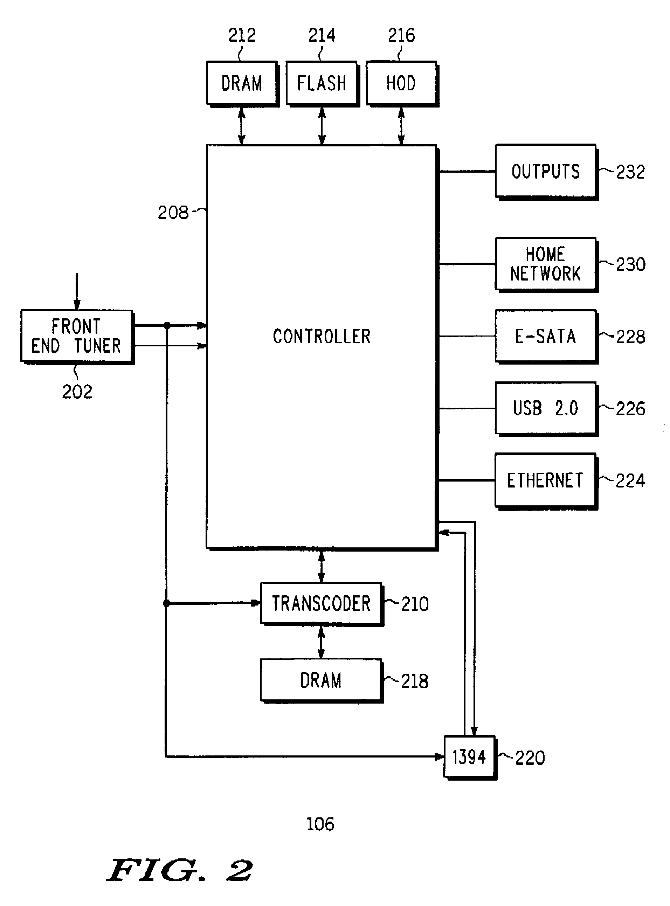

A detailed view of an exemplary endpoint device 106 is illustrated in FIG. 2. In an exemplary embodiment of the present invention, endpoint device 106 may be, for example, a set top box with DVR capabilities. FIG. 2 illustrates a block diagram of an exemplary endpoint device 106 that is implemented as a set top box. With reference to FIG. 2, endpoint device 106 and set top box 106 will be interchangeably used. However, endpoint device 106 should not be interpreted as being limited to a set top box implementation.

In one embodiment, set top box 106 comprises a controller 208 and a transcoder 210. Controller 208 comprises, for example, a processor for managing inputs and outputs from the end user and multi-media data transmitted by content database 102. In an exemplary embodiment, controller 208 may comprise a Back-end System on a Chip (SoC). Controller 208 may also be responsible for the management of the simultaneous transcoding of the multi-media data in conjunction with the transferring and/or recording of the multi-media data.

In an exemplary embodiment of the present invention, transcoder 210 simultaneously transcodes the multi-media data while controller 208 stores the multi-media data for later retrieval by an end user or outputs the multi-media data for display to the end user. In an exemplary embodiment, transcoding reformats the multi-media data into a format compatible with a connected external device 112. For example, re-formatting the multi-media data may include changing the resolution, scaling the video, changing the frame rate, changing the compression format (e.g., changing one or more encoding parameters that were used in encoding the multi-media data and the like), or any combination thereof.

Where the source content received is analog, in an exemplary embodiment of the present invention, transcoder 210 may instead be a smart encoder or dual encoder implementation that simultaneously encodes the received multi-media content into two digital formats, both of which may be stored by controller 208 onto the hard drive 216. One of these formats is optimized for the end point devices 106 outputs 232 to a display 110 while the other format is optimized for an external device 112.

Transcoder 210 may perform the transcoding in multiple ways. In one exemplary embodiment, transcoder 210 may function by processing the multi-media data into uncompressed raw data and then re-formatting the uncompressed raw data into a requested compressed format. For example, if the multi-media data is an MPEG-1 compressed video, the transcoder 210 may process the MPEG compressed video into uncompressed raw video and then re-format the uncompressed video into a requested compressed format such as for example, MPEG-2, MPEG-4, H.264, VC-1 and the like.

In another exemplary embodiment, transcoder 210 may function by directly transcoding the multi-media data from one format into the requested format. For example, if the multi-media data is an MPEG-2 compressed video, the transcoder 210 may transcode the MPEG-2 compressed video directly into MPEG-4 compressed video by taking advantage of information already contained in the MPEG-2 data. It should be noted that the present invention is not limited by the types of formats of the multi-media data that are being transcoded.

Moreover, transcoder 210 may simultaneously transcode the multi-media data into a plurality of different formats, e.g., four different formats while controller 208 stores the multi-media data for later retrieval by the end user or outputs the multi-media data for display to the end user. In one embodiment, FIG. 2 illustrates transcoder 210 and controller 208 being connected by one or more high speed connections for simultaneous transcoding in conjunction with transferring and/or recording of multi-media data. FIG. 2 illustrates an alternate high speed connection as well, directly from the front end tuner 202 to the transcoder 210, which may then route the transcoded data to the controller 208.

Connected to controller 208 may be multiple external device interfaces 220, 224, 226, 228 and 230. For example, external device interfaces may include connection ports such as a 1394 connection port 220, an Ethernet connection port 224, a USB 2.0 connection port 226, an E-SATA connection port 228 or a home network connection port 230. In an exemplary embodiment, the purpose of the interfaces is to provide set top box 106 with the capability to connect to a number of different types of external devices 112, regardless of the type of connection. Consequently, one skilled in the art will recognize that set top box 106 may be equipped with other external device interfaces not specifically depicted herein.

Also connected to controller 208 may be multiple outputs 232 for displaying the multi-media data to the end user. For example, outputs 232 may be audio outputs, component outputs such as Y, Pr and Pb for HD video, composite outputs for SD video, a RF NTSC/BTSC output, a I2S output, a SPDIF output or an HDMI output.

In addition, in an exemplary embodiment where the set top box 106 has DVR capabilities, controller 208 may be connected to various storage devices such as, for example, a DRAM memory 212, flash memory 214 and/or a hard drive 216. Transcoder 210 may also have a storage device connected directly to it, for example, DRAM memory 218. It should be noted that the present invention is not limited by the type of storage medium that is employed by the set top box.

The multi-media data from content database 102 is sent to controller 208 through a front end tuner 202. It should be noted that if the multi-media data can be received in a manner that does not require the use of a tuner (e.g., via an IP pipe), then the front end tuner 202 is an optional module. In an exemplary embodiment, the multi-media data may be sent as radio frequency (RF) input signals. The signals from front end tuner 202 are then transmitted to controller 208.

FIG, 3 illustrates an exemplary flow chart of a method 300 for providing simultaneous multi-media data transcoding in conjunction with transferring and/or recording of multi-media data. Method 300 begins at step 302 where multi-media data is received. In an exemplary embodiment, the multi-media data is received from content database 102, e.g., from a service provider, a broadcaster, a content database on-demand and the like.

In step 304, the multi-media data is then transmitted to an output device (e.g., a display or a storage device) of the endpoint device 106. In an exemplary embodiment of the present invention, the endpoint device 106 may immediately display the requested multi-media data, or it may record the multi-media data, or both. If the end user requests to watch the multi-media data, then the multi-media data is transmitted via output 232 to the display 110. If the end user requests the multi-media data to be recorded, then the multi-media data is outputted to and stored in one of the storage devices such as for example, DRAM memory 212, flash memory 214 or hard drive memory 216.

In step 306, as shown in parallel to step 304, the multi-media data is simultaneously transcoded into at least one alternate format. As discussed above, in an exemplary embodiment, transcoding broadly reformats the multi-media data into an alternate format, e.g., that is compatible with a connected external device 112. For example, transcoding the multi-media data may include changing the resolution, scaling the video, changing the frame rate, changing the compression format, or any combination thereof. As discussed, external device 112 may be any personal media player such as portable video and audio consumer electronic devices. For example, portable video and audio consumer electronic devices may be a Video iPod™ (of Apple Computer of Cupertino, CA), a video iPod™ (also of Apple Computer of Cupertino, CA), and other similar portable media players. Alternatively, it may be a media-capable cell phone or handheld communicator or computing device.

In one embodiment, endpoint device 106 may provide a graphical user interface (GUI) to the user via the display 110. The applications software for the GUI may be stored locally in DRAM 212, Flash 214, or hard disk 216 at the controller 208 and executed by a processor of the controller 208. Alternatively, the applications software may also be stored remotely and provided to the processor on the controller 208 as a web browser or internet web page. The GUI may provide a pre-populated drop down menu for the end user to select what type of external device 112 is connected to the endpoint device 106. Based on the end user's selection, the endpoint device 106 may automatically select the proper format the multi-media data should be transcoded into, such that the transcoded multi-media data is compatible for use with the external device 112.

In another exemplary embodiment, the endpoint device 106 may be configured such that discovery is performed. In other words, for example, if a USB 2.0 connection is used, the endpoint device 106 may automatically detect the type of multi-media format that is used on external device 112 once external device 112 is connected to the endpoint device 106. Consequently, upon detection, endpoint device 106 may automatically select the proper format the multi-media data should be transcoded into, such that the transcoded multi-media data is compatible for use with the external device 112.

By simultaneously transcoding the multi-media data while either displaying the multi-media data and/or recording the multi-media data, greater efficiency and time savings is achieved for the end user. For example, if a user has to leave in fifteen minutes, but wishes to transfer a movie on his set top box to a personal media player before leaving, the user would previously have to transcode the movie into a format that is compatible with his personal media player, Generally, such transcoding process will take a substantial amount of time, e.g., as much or more time as the actual length of the movie. For example, if the movie runs for two hours, transcoding the movie may take an additional two hours. Therefore, it would be very unlikely for the user to transfer the movie to his personal media player within his time constraints.

However, using the present invention, the movie will already be transcoded as stored on the set top box (or directly to an external device 112). Therefore, the user simply needs to transfer the movie to his personal media player and the movie will already be in a format that is compatible with his media player. The time constraint is limited to a data transfer function and not to a transcoding function. Moreover, the user may be able to transfer the movie to his personal media player to meet his time constraints. Thus, by simultaneously transcoding the movie while displaying the movie to the end user and/or recording the movie as requested by an end user, the end user saves a substantial amount of time. Consequently, greater efficiency and time savings is achieved for the end user, and the probability of the end user being able to practically use multi-media content on their portable devices becomes much higher in practice due to the significantly improved convenience.

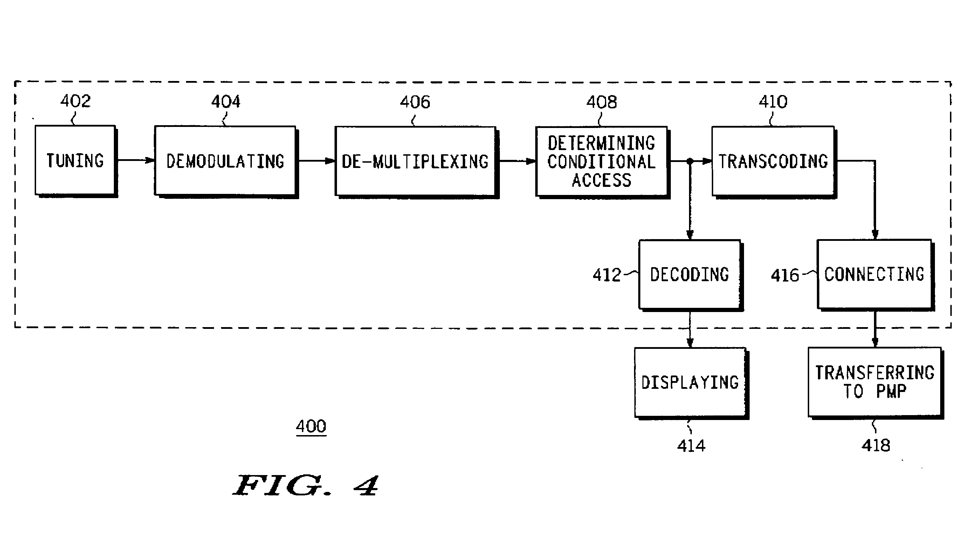

As discussed above, the endpoint device 106 may simultaneously transcode the multi-media data while displaying the multi-media data and/or recording the multi-media data. An exemplary embodiment of a method 400 for simultaneously transcoding the multi-media data while displaying the multi-media data is illustrated in FIG. 4. This method 400 may also be referred to as the non-storage embodiment of the present invention.

In an exemplary embodiment, method 400 begins with tuning step 402. For example, a tuner may tune to a particular frequency of an inputted signal that is carrying the desired multi-media data. The inputted signal is demodulated at step 404, for example by a demodulator. Subsequently at step 406, the demodulated signal is then demultiplexed. Then at step 408, conditional access is determined, e.g., based on pertinent digital rights managements (DRM) rules and/or parameters. Subsequently, the signal is transmitted simultaneously to step 410 to be transcoded and to step 412 to be decoded. As shown in FIG. 4, an external device may be connected in step 416, for example via a USB connection. At step 418, the transcoded signal is transferred to the external device, for example a personal media player (PMP) or cell phone. Simultaneously, the signal is displayed at step 414 to an end user.

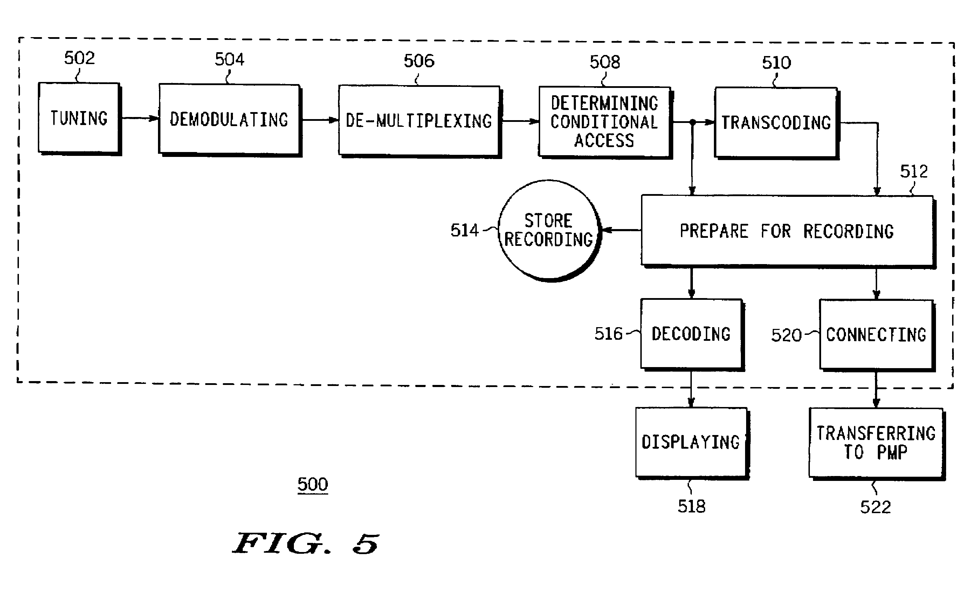

An exemplary embodiment of a method 500 for simultaneously transcoding the multi-media data while recording the multi-media data is illustrated in FIG. 5. This method 500 may also be referred to as the storage embodiment.

In an exemplary embodiment, method 500 begins with tuning step 502. For example, a tuner may tune to a particular frequency of an inputted signal that is carrying the desired multi-media data. The inputted signal is demodulated at step 504, for example by a demodulator. Subsequently at step 506, the demodulated signal is then demultiplexed. Then at step 508, conditional access is determined, e.g., based on pertinent digital rights managements (DRM) rules and/or parameters. Subsequently, the signal is transmitted simultaneously to step 510 to be transcoded and to step 512 to be prepared for recording, for example by a DVR engine microcontroller. At step 512, the multi-media data may be outputted in step 514 to a storage medium to store the recording, for example via an internal hard drive. Moreover, an external device may be connected in step 520, for example via a USB connection. At step 522, the transcoded signal is transferred to the external device, for example a PMP. If an end user requests to replay the recorded multi-media data, the recorded multi-media data may be transmitted to step 516 to be decoded and then to step 518 to be displayed to the end user.

It should be noted that although FIG. 4 and FIG. 5 both illustrate tuning and demodulating modules, these modules should be deemed as being optional and should not be interpreted to limit the present invention. In other words, depending on the transmission of the multi-media data (e.g., an IPTV solution or Internet downloaded media content), the tuning and demodulating modules should be deemed as optional modules.

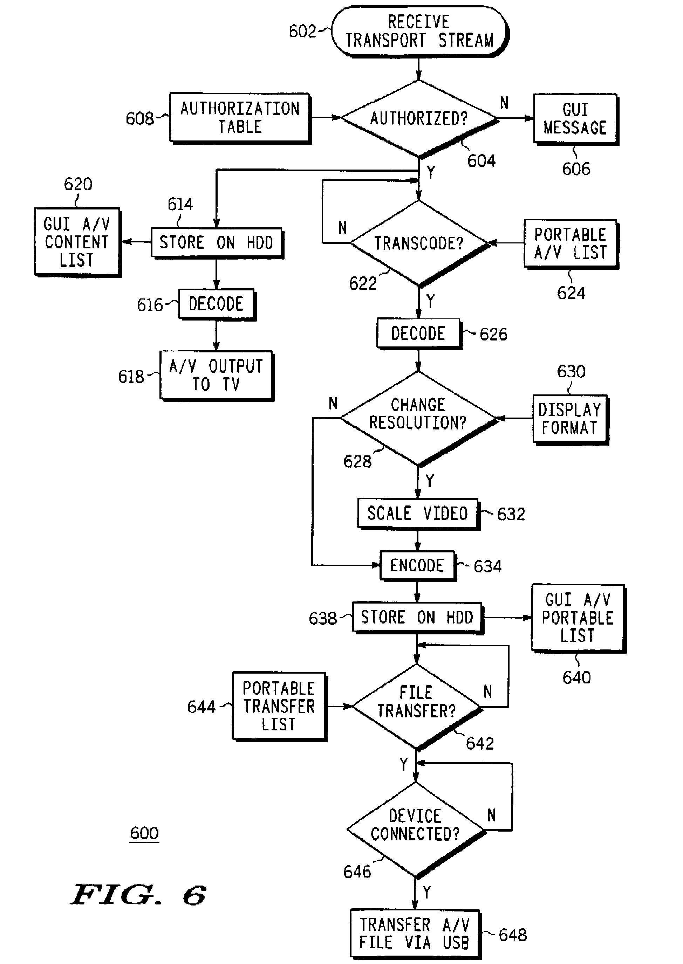

FIG. 6 illustrates a more detailed flow chart of an exemplary method 600 for simultaneously transcoding the multi-media data. Method 600 begins by receiving a multi-media data transport stream, for example an MPEG-2 transport stream in step 602.

In step 604, a decision is made as to whether or not a user is authorized to access the multi-media data transport stream. If the user is authorized, e.g. based upon an authorization table 608 then the method 600 proceeds to step 614. If the user is unauthorized, then a GUI message is displayed to the user indicating that the user is unauthorized at step 606.

Subsequently, the multi-media data transport stream may be stored in step 614 in a storage medium, for example a hard drive.

A GUI audio/video content list may be presented to a user in step 620. If a particular audio/video content is selected, the selected audio/video content may be decoded in step 696 and then outputted to a user in step 618, for example, via a display such as a television.

Notably, simultaneous to step 614, a parallel path is executed beginning with a decision whether or not to transcode the multi-media data transport stream in step 622. An external device list, for example a PMP audio/video list, may be provided in step 624 for a user to select the appropriate external device to be connected to endpoint device 106 via a GUI or the endpoint device 106 may automatically determine the connected external device 112 via a discovery process, as discussed above. If transcoding is not desired at step 622, the method 600 may loop back to immediately before step 622 to await another response. If transcoding is desired, then method 600 proceeds to step 626.

At step 626, the multi-media data transport stream is decoded or partially decoded depending on the implementation. Although the following steps of method 600 refer to characteristics that are related to video, one skilled in the art will recognize that the following decoding steps may be substituted to adjust to the characteristics of any multi-media data format type.

The method 600 proceeds to step 628 where a decision is made as to whether the resolution should be changed. A proper display format is provided in step 630 to decision block 628 to help make the decision. The proper display format may be selected based upon the proper detection of the display format of the external device 112 connected to endpoint device 106, as discussed above with reference to step 624.

If a decision is made not to change resolution in step 628, the method 600 proceeds directly to step 634. If a decision is made to change the resolution in step 628, then the method 600 proceeds to step 632 where the multi-media data transport stream is scaled accordingly.

At step 634, the multi-media data transport stream is encoded into an alternate format, e.g. compatible with the external device 112. For example, in step 634, the multi-media data transport stream may be encoded into an MPEG-4 or AVC format.

Subsequently at step 638 the transcoded multi-media transport stream may be stored on a storage medium such as, for example, a hard drive. At step 640, a GUI may be displayed to a user to provide a list of all properly transcoded multi-media data in various formats that are now available, e.g., to be transferred onto an external device 112.

Next, at step 642, a decision is made as to whether a file, such as one of the transcoded multi-media data in the previously provided list of step 640, should be transferred to an external device 112. A portable transfer list may be provided at step 644. If no file is to be transferred at step 642, method 600 loops back to step 642 to await a decision.

However, if a file is to be transferred at step 642, method 600 determines whether or not an external device 112 is connected to the endpoint device 108 at step 646. If a device is not properly connected, method 600 loops back to immediately before step 646 and waits for an external device 112 to be properly connected.

When a device is properly connected in step 646, then method 600 proceeds to step 648 where the file is transferred to a properly connected external device 112. For example, the file may be transferred via any of the interfaces, as discussed above with reference to FIG. 2, such as a 1394 connection port 220, an Ethernet connection port 224, a USB 2.0 connection port 226, a E-SATA connection port 228 or a home network connection port 230. Advantageously, multi-media data is simultaneously transcoded, while being transferred and/or recorded.

FIG. 7 illustrates a high level block diagram of an exemplary general purpose computer suitable for use in performing the functions described herein. As depicted in FIG. 7, the system 700 comprises a processor element 702 (e.g., a CPU), a memory 704, e.g., random access memory (RAM) and/or read only memory (ROM), a transcoder module 705 for providing simultaneous transcoding of multi-media data, and various input/output devices 706 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the processes provided by the present transcoder module 705 can be loaded into memory 704 and executed by processor 702 to implement the functions as discussed above. As such, the processes provided by the transcoder module 705 (including associated data structures) of the present invention can be stored on a computer readable medium or carrier, e.g., RAM memory, magnetic or optical drive or diskette and the like.

While the foregoing is directed to illustrative embodiments of the present invention, other and further embodiments of the invention may be devised without departing from the basic scope thereof, and the scope thereof is determined by the claims that follow.

## Claims

1. A method for providing simultaneous transcoding of multi-media data, comprising:
receiving multi-media data in a first format;
transmitting said multi-media data to an output device; and
transcoding simultaneously said multi-media data into at least one alternate format that is different from said first format, while said multi-media data is transmitted to said output device.

2. The method of claim 1, wherein said multi-media data comprises at least one of: video data, audio data or digital pictures.

3. The method of claim 1, wherein said first format is an analog format and wherein said at least one alternate format comprises a first digital format and a second digital format.

4. The method of claim 1, wherein said transcoding comprises at least one of: changing a resolution of said multi-media data, changing a frame rate of said multi-media data or changing a compression format of said multi-media data.

5. The method of claim 1, wherein said transmitting said multi-media data to an output device comprises transmitting said multi-media data to a display device.

6. The method of claim 1, wherein said transmitting said multi-media data to an output device comprises transmitting said multi-media data to a storage device.

7. The method of claim 1, further comprising:
transmitting said transcoded multi-media data in said alternate format to an external device.

8. The method of claim 7, wherein said external device comprises a portable media player.

9. The method of claim 1, wherein said multi-media data in said first format is received from a service provider.

10. The method of claim 1, wherein said multi-media data in said first format is received from a local content source.
